# EUROPEAN PATENT APPLICATION

(11) **EP 4 550 143 A1**
(43) Date of publication of application: **07.05.2025**
(21) Application number: 23854144.5
(22) Date of filing: 05.07.2023
(51) Int. Cl.: G06F 9/50

(54) **ACCELERATOR SCHEDULING METHOD AND RELATED DEVICE**

(30) Priority: 15.08.2022 CN 202210977273
(71) Applicant: Huawei Technologies Co., Ltd., Shenzhen, Guangdong 518129 (CN)
(72) Inventor: HOU, Bingjian, Shenzhen, Guangdong 518129 (CN); LI, Yuan, Shenzhen, Guangdong 518129 (CN); FANG, Hao, Shenzhen, Guangdong 518129 (CN); WANG, Yu, Shenzhen, Guangdong 518129 (CN)
(74) Representative: Goddar, Heinz J.
(86) International application number: PCT/CN2023/105900
(87) International publication number: WO 2024/037239

(57) **Abstract**

Embodiments of this application disclose an accelerator scheduling method and a related apparatus. The method includes: receiving a first request, where the first request is used to request to configure a target accelerator for a first task, the first task is a task currently being run in a first process, the first process is run in a processor, the processor includes a plurality of processing cores, the first task includes a plurality of subtasks, and each of the subtasks corresponds to one of the plurality of processing cores; determining, in response to the first request, the target accelerator from N accelerators based on a processing core corresponding to a first subtask in the first task, where N is an integer greater than 0; and scheduling the first task to the target accelerator for processing. According to embodiments of this application, computing performance of a system can be improved.

## Description

This application claims priority to Chinese Patent Application No. 202210977273.6, filed with the China National Intellectual Property Administration on August 15, 2022 and entitled "ACCELERATOR SCHEDULING METHOD AND RELATED APPARATUS", which is incorporated herein by reference in its entirety.

### TECHNICAL FIELD

This application relates to the field of network communication technologies, and in particular, to an accelerator scheduling method and a related apparatus.

### BACKGROUND

In recent years, the development of a general-purpose computing capability of a central processing unit (Central Processing Unit, CPU) has slowed down, while computing capabilities required by emerging services such as machine learning and web services have increased exponentially. With the mature development of hardware technologies, compared with some dedicated acceleration hardware, the CPU no longer has an absolute advantage in terms of the computing capability and resource costs. This also leads to a growing preference for hardware acceleration technologies among major companies.

Currently, Intel proposes a quick assist technology (Quick Assist Technology, QAT), which is an acceleration solution for high-performance data security and compression. In this solution, a QAT chip is used to share a task with a large computing amount, for example, symmetric/asymmetric encryption computing or lossless compression, to reduce usage of the CPU and improve overall system performance. Specifically, an accelerator device is abstracted into a logic accelerator, and the QAT supports a single instance of an acceleration unit in one logic accelerator, or configures simple ring polling load balancing. However, currently, the QAT supports only an operation on a single accelerator device, in other words, when an application process is initialized, a target accelerator that is subsequently always used needs to be selected from a plurality of accelerators. Therefore, regardless of which processing core the application process is run on, the task is scheduled to the target accelerator for processing. In this process, application processes contend for an accelerator, causing problems such as load imbalance of the accelerator and performance deterioration of the accelerator.

Therefore, how to provide an accelerator scheduling method and a related apparatus to improve computing performance of a system is an urgent problem to be resolved.

### SUMMARY

A technical problem to be resolved in embodiments of this application is to provide an accelerator scheduling method and a related apparatus to improve computing performance of a system.

According to a first aspect, an embodiment of this application provides an accelerator scheduling method. The method includes: receiving a first request, where the first request is used to request to configure a target accelerator for a first task, the first task is a task currently being run in a first process, the first process is run in a processor, the processor includes a plurality of processing cores, the first task includes a plurality of subtasks, and each of the subtasks corresponds to one of the plurality of processing cores; determining, in response to the first request, the target accelerator from N accelerators based on a processing core corresponding to a first subtask in the first task, where N is an integer greater than 0; and scheduling the first task to the target accelerator for processing.

In this embodiment of the present invention, a currently optimal accelerator may be selected from a plurality of accelerators as the target accelerator for a task currently being run in an application process, and the task may be scheduled to the target accelerator for processing, to improve computing performance of a system. Specifically, the application process is used to run an application service. The application service may include a plurality of tasks, and each task may include a plurality of subtasks. For the task currently being run in the application process, based on a processing core corresponding to the task, an accelerator with a high affinity with the processing core may be selected from the plurality of accelerators as the target accelerator (where an accelerator with a higher affinity can access an internal memory corresponding to the processing core more quickly), so that the task can be scheduled to the target accelerator for processing. However, in the conventional technology, when the application service is initialized, a target accelerator that is subsequently always used needs to be selected from the plurality of accelerators, so that regardless of which task is run in the application process, the task is scheduled to the target accelerator for processing. However, in this process, different tasks may be run on different processing cores, and different processing cores have different affinities with the target accelerator. When an affinity between a processing core corresponding to a task and the target accelerator is low, the target accelerator cannot quickly access an internal memory corresponding to the processing core, resulting in a problem such as a reduction of computing efficiency. In conclusion, in this application, when the plurality of tasks in the application service are run, an optimal accelerator may be selected from the plurality of accelerators as the target accelerator for each task based on a processing core corresponding to the task, to avoid the problem that computing efficiency is reduced because the task is scheduled to an accelerator with a low affinity for processing. This improves the computing performance of the system.

In a possible implementation, the determining the target accelerator from N accelerators based on a processing core corresponding to a first subtask in the first task includes: determining the target accelerator from the N accelerators based on the processing core corresponding to the first subtask and real-time status information of the N accelerators.

In this embodiment of the present invention, based on the processing core corresponding to the first subtask in the first task and real-time status information (including current status information of each accelerator) of a plurality of accelerators, an accelerator that has a high affinity with the processing core and currently optimal performance may be determined from the N accelerators as the target accelerator, to ensure that the target accelerator can quickly process the first task and can also access an internal memory corresponding to the processing core more quickly. This improves the computing performance of the system.

In a possible implementation, the method further includes: obtaining the real-time status information, where the real-time status information includes one or more of load status information, memory access speed information, and accelerator capability value information of each of the N accelerators; and the memory access speed information indicates corresponding speeds at which a corresponding accelerator accesses different internal memories, and the accelerator capability value information indicates a quantity of acceleration units included in the corresponding accelerator.

In this embodiment of the present invention, when each accelerator device goes online, accelerator location information may be obtained and a NUMA affinity may be set, to determine the memory access speed information of the accelerator, where the information indicates the corresponding access speeds at which the corresponding accelerator accesses different internal memories. A quantity of acceleration units included in each accelerator may be obtained, to determine the accelerator capability value information, in other words, a larger quantity of acceleration units indicates higher accelerator computing efficiency. An accelerator load status may further be dynamically obtained, and an accelerator load value is updated in real time. According to this embodiment of the present invention, before the target accelerator is selected for the first task, real-time status information of a plurality of accelerators can be obtained in a timely manner, to select a currently optimal accelerator from the plurality of accelerators as the target accelerator. Further, the task may be scheduled to the target accelerator for processing, to improve the computing performance of the system.

In a possible implementation, the determining the target accelerator from the N accelerators based on the processing core corresponding to the first subtask and real-time status information of the N accelerators includes: determining, from the N accelerators based on the processing core corresponding to the first subtask and the real-time status information of the N accelerators according to a preset scoring rule, an accelerator with a highest score as the target accelerator.

In this embodiment of the present invention, real-time status information of a plurality of accelerators may be first obtained, then information about the processing core corresponding to the first subtask in the first task is viewed, and a NUMA node on which the processing core is located is determined based on the information about the processing core, to determine a NUMA affinity. Further, based on a NUMA affinity, an accelerator capability value, and an accelerator load value that correspond to each accelerator according to the preset scoring rule, comprehensive scoring is performed on each accelerator, and an accelerator with a highest comprehensive score is determined as an optimal accelerator. Further, the task may be scheduled to the target accelerator for processing, to improve the computing performance of the system.

In a possible implementation, the scheduling the first task to the target accelerator for processing includes: determining whether a load value corresponding to load status information of the target accelerator is greater than a preset value; and if the load value is less than or equal to the preset value, obtaining path information of the target accelerator, and scheduling, based on the path information of the target accelerator, the first task to the target accelerator for processing.

In this embodiment of the present invention, before the task is scheduled to the target accelerator, whether a current load value of the target accelerator is greater than the preset value may be first determined. If the current load value of the target accelerator is less than or equal to the preset value, it indicates that the target accelerator is in an idle state or a light-loaded state, and the target accelerator can process the first task in a timely manner. Therefore, the path information of the target accelerator can be obtained, and the task is scheduled, based on the path information, to the target accelerator for processing, to reduce usage of the processor and improve the computing performance of the system.

In a possible implementation, the method further includes: if the load value is greater than the preset value, scheduling the first task to the processor for processing.

In this embodiment of the present invention, before the task is scheduled to the target accelerator, whether a current load value of the target accelerator is greater than the preset value may be first determined. If the current load value of the target accelerator is greater than the preset value, it indicates that the target accelerator is in a busy state and the target accelerator cannot process the first task in a timely manner, or a cross-NUMA cost or a cross-CPU cost is excessively high. Therefore, the first task may still be scheduled to the processor for processing, to ensure the computing performance of the system.

In a possible implementation, the method further includes: updating the path information of the target accelerator and the processing core corresponding to the first subtask to context information corresponding to the first task.

In this embodiment of the present invention, after the target accelerator corresponding to the task is determined, the path information of the target accelerator and information about the processing core may be determined, and the path information of the target accelerator and the information about the processing core are updated to the context information corresponding to the task. Therefore, the subtask in the task may be subsequently scheduled, based on the path information of the target accelerator in the context information, to the target accelerator for processing, and a corresponding internal memory may be accessed based on the information about the processing core in the context information, to improve the computing performance of the system.

In a possible implementation, the method further includes: when executing an i^{th} subtask in the plurality of subtasks, obtaining the path information of the target accelerator from the context information, and scheduling the i^{th} subtask to the target accelerator for processing, where i is an integer greater than 1.

In this embodiment of the present invention, when the subtask in the task is executed, the context information corresponding to the task may be obtained, and the subtask is scheduled, based on the path information of the target accelerator in the context information, to the target accelerator for processing, to improve the computing performance of the system.

According to a second aspect, this application provides an accelerator scheduling apparatus. The accelerator scheduling apparatus includes a task management unit, and the task management unit is configured to: receive a first request, where the first request is used to request to configure a target accelerator for a first task, the first task is a task currently being run in a first process, the first process is run in a processor, the processor includes a plurality of processing cores, the first task includes a plurality of subtasks, and each of the subtasks corresponds to one of the plurality of processing cores; determine, in response to the first request, the target accelerator from N accelerators based on a processing core corresponding to a first subtask in the first task, where N is an integer greater than 0; and schedule the first task to the target accelerator for processing.

In a possible implementation, the task management unit is specifically configured to: determine the target accelerator from the N accelerators based on the processing core corresponding to the first subtask and real-time status information of the N accelerators.

In a possible implementation, the accelerator scheduling apparatus further includes an accelerator management unit, and the accelerator management unit is configured to: send the real-time status information to the task management unit, where the real-time status information includes one or more of load status information, memory access speed information, and accelerator capability value information of each of the N accelerators; and the memory access speed information indicates corresponding speeds at which a corresponding accelerator accesses different internal memories, and the accelerator capability value information indicates a quantity of acceleration units included in the corresponding accelerator.

In a possible implementation, the task management unit is specifically configured to: determine, from the N accelerators based on the processing core corresponding to the first subtask and the real-time status information of the N accelerators according to a preset scoring rule, an accelerator with a highest score as the target accelerator.

In a possible implementation, the task management unit is specifically configured to: determine whether a load value corresponding to load status information of the target accelerator is greater than a preset value; and if the load value is less than or equal to the preset value, obtain path information of the target accelerator, and schedule, based on the path information of the target accelerator, the first task to the target accelerator for processing.

In a possible implementation, the task management unit is further configured to: if the load value is greater than the preset value, schedule the first task to the processor for processing.

In a possible implementation, the task management unit is further configured to: update the path information of the target accelerator and the processing core corresponding to the first subtask to context information corresponding to the first task.

In a possible implementation, the task management unit is further configured to: when executing an i^{th} subtask in the plurality of subtasks, obtain the path information of the target accelerator from the context information, and schedule the i^{th} subtask to the target accelerator for processing, where i is an integer greater than 1.

According to a third aspect, this application provides a computer storage medium. The computer storage medium stores a computer program, and when the computer program is executed by a processor, the method according to any one of the implementations of the first aspect is implemented.

According to a fourth aspect, an embodiment of this application provides an electronic device. The electronic device includes a processor, and the processor is configured to support the electronic device in implementing corresponding functions in the accelerator scheduling method provided in the first aspect. The electronic device may further include a memory. The memory is configured to be coupled to the processor, and the memory stores program instructions and data that are necessary for the electronic device. The electronic device may further include a communication interface, used by the electronic device to communicate with another device or a communication network.

According to a fifth aspect, this application provides a chip system. The chip system includes a processor, configured to support an electronic device in implementing the functions in the first aspect, for example, generating or processing information in the foregoing accelerator scheduling method. In a possible design, the chip system further includes a memory. The memory is configured to store program instructions and data that are necessary for the electronic device. The chip system may include a chip, or may include a chip and another discrete component.

According to a sixth aspect, this application provides a computer program. The computer program includes instructions, and when the computer program is executed on a computer, the computer is enabled to perform the method according to any one of the implementations of the first aspect.

### BRIEF DESCRIPTION OF DRAWINGS

FIG. 1 is a diagram of a system architecture of a host according to an embodiment of the present invention;
FIG. 2 is a schematic flowchart of an accelerator scheduling method according to an embodiment of this application;
FIG. 3 is a diagram of software run on a host according to an embodiment of the present invention;
FIG. 4 is a diagram of a software architecture according to an embodiment of the present invention;
FIG. 5 is a diagram of task management according to an embodiment of the present invention;
FIG. 6 is a diagram of determining a target accelerator according to an embodiment of the present invention;
FIG. 7 is a diagram of an accelerator manager according to an embodiment of the present invention;
FIG. 8 is a diagram of determining a target accelerator by a task manager according to an embodiment of the present invention;
FIG. 9 is a diagram of combining a plurality of devices to schedule a task according to an embodiment of the present invention; and
FIG. 10 is a diagram of a structure of an accelerator scheduling apparatus according to an embodiment of the present invention.

### DESCRIPTION OF EMBODIMENTS

The following describes embodiments of this application with reference to the accompanying drawings in embodiments of this application.

In the specification, the claims, and the accompanying drawings of this application, the terms "first", "second", "third", "fourth", and the like are intended to distinguish between different objects but do not indicate a particular order. In addition, the terms "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification indicates that a particular feature, structure, or characteristic described with reference to this embodiment may be included in at least one embodiment of this application. The phrase appearing at various locations in the specification does not necessarily refer to a same embodiment, and is not an independent or alternative embodiment exclusive from another embodiment. It is explicitly and implicitly understood by persons skilled in the art that embodiments described in the specification may be combined with another embodiment.

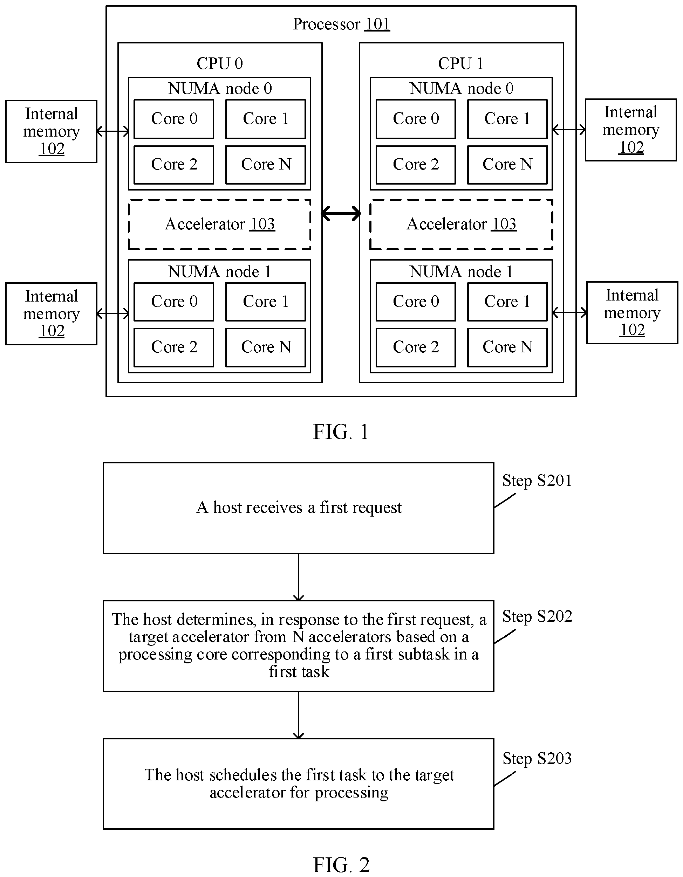

Based on the foregoing descriptions, embodiments of the present invention provide a host. FIG. 1 is a diagram of a system architecture of a host according to an embodiment of the present invention. The host may include but is not limited to a processor 101, an internal memory 102, and an accelerator 103.

The processor 101 may include one or more processing units (also referred to as processing cores). For example, the processor 101 may include one or more of a central processing unit (Central Processing Unit, CPU), an application processor (application processor, AP), a modulation and demodulation processing unit, a graphics processing unit (graphics processing unit, GPU), an image signal processor (image signal processor, ISP), a video codec unit, a digital signal processor (digital signal processor, DSP), a baseband processing unit, a neural-network processing unit (neural-network processing unit, NPU), and the like. Different processing units may be independent components, or may be integrated into one or more components.

In a non-uniform memory access (Non-Uniform Memory Access, NUMA) architecture, each processor 101 may include a plurality of NUMA nodes, each NUMA node includes a computing unit (which may alternatively be a processing core) in the processor 101, and different NUMA nodes may be connected through a bus. An internal memory 102 closer to a NUMA node is generally referred to as a local memory, and an internal memory 102 farther from the NUMA node is generally referred to as a remote memory. The NUMA node may directly access the local memory, but cannot directly access the remote memory.

The processor 101 may run an operating system, a file system (for example, a flash memory file system), an application process, or the like, to control a plurality of hardware elements or software elements connected to the processor 101, and the processor 101 may process various types of data and perform operations. The processor 101 may load, to the internal memory 102, instructions or data stored in an external memory (for example, a magnetic disk), and invoke, to the processor 101 for operation, the instructions or data that needs to be operated. After the operation is completed, the processor 101 then temporarily stores a result in the internal memory 102, and stores, in the external memory by using a controller, instructions or data that needs to be stored for a long time. For example, a NUMA node 0 in a CPU 0 may load the instructions or data stored in the external memory to a local memory, and invoke, to the processor 101 for operation, the instructions or data that needs to be operated. After the operation is completed, the processor 101 then temporarily stores a result in the local memory. In this embodiment of the present invention, since computing performance of the processor 101 is limited, the processor 101 may also allocate a task with a large computing amount to the accelerator 103 (which may include a dedicated chip and is configured to process a specific task) for processing. For example, a QAT chip is used to share the task with a large computing amount, for example, symmetric/asymmetric encryption computing or lossless compression, to reduce usage of the processor 101 and improve system performance. The following describes in detail how to determine a target accelerator and how to schedule a task to the target accelerator for processing. Details are not described herein.

The internal memory 102 is usually a volatile memory, and content stored in the internal memory 102 is lost when power is off. The internal memory 102 may also be referred to as a memory (Memory) or a main memory. The internal memory 102 in this application includes a readable and writable running memory. The running memory is configured to: temporarily store operation data in the processor 101 or the accelerator 103 and exchange data with the external memory or another external memory, and may serve as a storage medium for temporary data of the operating system or another running program.

In the NUMA architecture, the NUMA node in the processor 101 may store required data in the local memory, so that the NUMA node or an accelerator 103 with a high affinity can quickly obtain the required data. For example, assuming that the accelerator 103 is a QAT chip, and the NUMA node 0 in the CPU 0 establishes a connection to the QAT chip, the NUMA node 0 may schedule a computing task of the NUMA node 0 to the accelerator 103 for processing. In this process, data or instructions required for executing the task may be first loaded to the local memory, and then the accelerator 103 may directly access the local memory to obtain the required data or instructions, and execute the computing task, to reduce usage of the processor 101 and improve system performance.

The internal memory 102 may include one or more of a dynamic random access memory (DRAM), a static random access memory (SRAM), a synchronous dynamic random access memory (SDRAM), and the like. The DRAM includes a double data rate synchronous dynamic random access memory (Double Data Rate Synchronous Dynamic Random Access Memory, DDR SDRAM, DDR for short), a double data rate 2 (DDR2) synchronous dynamic random access memory, a double data rate 3 (DDR3) synchronous dynamic random access memory, a low power double data rate 4 (Low Power Double Data Rate 4, LPDDR4) synchronous dynamic random access memory, a low power double data rate 5 (Low Power Double Data Rate 5, LPDDR5) synchronous dynamic random access memory, and the like.

It may be understood that the system architecture of the host in FIG. 1 is merely some example implementations provided in embodiments of the present invention. The system architecture of the host in embodiments of the present invention includes but is not limited to the foregoing implementations.

The following describes a specific method architecture on which embodiments of the present invention are based.

FIG. 2 is a schematic flowchart of an accelerator scheduling method according to an embodiment of this application. The following describes the accelerator scheduling method in this embodiment of this application with reference to FIG. 2. It should be noted that, to describe the accelerator scheduling method in this embodiment of this application in more detail, in each procedure and step in this application, a corresponding execution body is described as the host in FIG. 1, but it does not indicate that a corresponding method procedure can be performed only by the described execution body in this embodiment of this application.

Step S201: The host receives a first request.

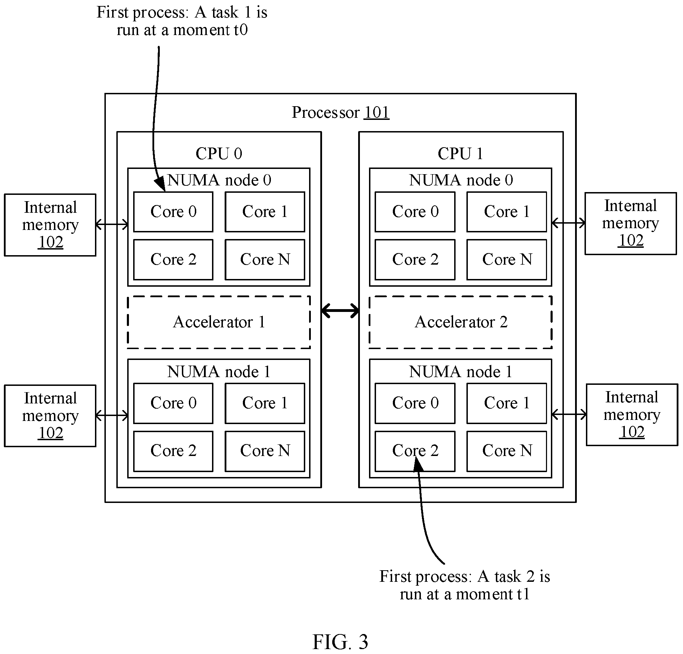

Specifically, the first request may be understood as an initial application request initiated for a first task. The first request is used to request to configure a target accelerator for the first task, the first task is a task that is currently being run in a first process and that is not associated with an accelerator, the first process is run in a processor, the processor includes a plurality of processing cores, the first task includes a plurality of subtasks, and each of the subtasks corresponds to one of the plurality of processing cores. FIG. 3 is a diagram of software run on the host according to this embodiment of the present invention. In the figure, the first process may be used to run an application service, and the application service may include a plurality of tasks. For example, at a moment t0, a task 1 (for example, a compression task) in the application service may be run in the first process, and at a moment t1, a task 2 (for example, a decompression task) in the application service may be run in the first process. The task that is currently being run in the first process and that is not associated with the accelerator may be determined as the first task. The first task may include the plurality of subtasks, and each subtask may be run on a same processing core or different processing cores based on scheduling of an operating system. For example, at the moment t0, a first subtask in the task 1 is run on a processing core 0 in a NUMA node 0 in a CPU 0, and then another subtask in the task 1 may always be run on the processing core, or may be run on another processing core. In this application, for the first task, a processor 101 may initiate the first request, used to request to configure the target accelerator for the first task, so that the first task can be scheduled from the processor 101 to the target accelerator for processing, to improve computing performance of the system.

For example, as shown in FIG. 3, the task 1 is currently being run in the first process (in other words, the task currently being run in the first process is determined as the first task). The task 1 may include a plurality of subtasks, and the first subtask is run on the processing core 0 in the NUMA node 0 in the CPU 0. The processor 101 (which may be specifically the processing core 0 in the NUMA node 0 in the CPU 0) may initiate the first request, where the first request is used to request to configure the target accelerator for the task 1, so that the first task can be scheduled from the processor 101 to the target accelerator for processing, to improve the computing performance of the system.

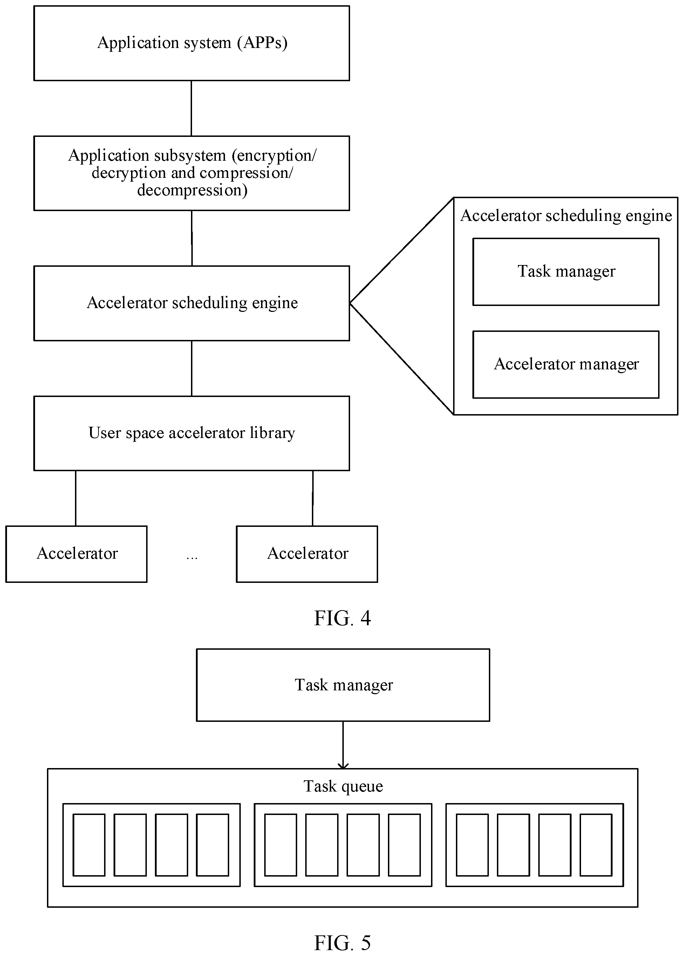

The following describes, with reference to FIG. 4, a software architecture running on the host. FIG. 4 is a diagram of the software architecture according to this embodiment of the present invention. In the figure, an application system is responsible for executing the application service (where each application service may be run in one process, for example, the first process), and the application system may invoke the accelerator by invoking an application library subsystem or a driver subsystem. The application library subsystem may include but is not limited to an open secure socket layer (Open Secure Socket Layer, OpenSSL) protocol accelerator engine, an encryption/decryption library, a compression/decompression library, and the like, and may provide a standard interface for an upper layer. In addition, the software architecture may further include a user space accelerator library. The user space accelerator library is used in cooperation with a kernel space accelerator (User space Accelerator, UACCE) framework. The user space accelerator library and the kernel space accelerator framework may be combined to enable accelerator hardware registered with the UACCE framework to access an internal memory 102 based on an address of user space software, so that a communication channel based on first in first out (First Input First Output, FIFO) can be established between the processor 101 and the accelerator. In this application, an accelerator scheduling engine is added to the software architecture. The accelerator scheduling engine may be configured to receive a first request initiated by the user space accelerator library, where the first request is used to request to configure the target accelerator for the task currently being run in the first process. Therefore, the accelerator scheduling engine may select one of a plurality of accelerators as the target accelerator based on current status information of the plurality of accelerators and the like, and schedule the task to the target accelerator for processing, to improve the computing performance of the system. The accelerator scheduling engine may include a task manager and an accelerator manager. The task manager may be configured to: respond to the first request, determine the target accelerator, and the like. The accelerator manager may be configured to obtain the current status information of the plurality of accelerators and the like.

In some embodiments, FIG. 5 is a diagram of task management according to this embodiment of the present invention. When receiving each request, the task manager in the accelerator scheduling engine can determine whether the request is an initial application request (namely, the first request mentioned above). If the request is the initial application request, a task corresponding to the request may be marked as a "configurable" task, and then the task may be added to a task queue in a receiving sequence, so that a target accelerator can be selected for the "configurable" task subsequently. If the request is not the initial application request, it indicates that a target accelerator has been configured for a task before. In this case, the task corresponding to the request may be marked as a "configured" task, and then the task may be added to a task queue in a receiving sequence, so that the "configured" task is subsequently scheduled, based on information about the target accelerator corresponding to the task, to the corresponding accelerator for processing.

Step S202: The host determines, in response to the first request, the target accelerator from N accelerators based on a processing core corresponding to a first subtask in the first task. N is an integer greater than 0.

Specifically, the accelerator scheduling engine (which may be specifically the task manager in the accelerator scheduling engine) in the software architecture running on the host may respond to the first request. The first request is used to request to configure the target accelerator for the first task, the first task may include the plurality of subtasks, each subtask may correspond to one processing core, and the processing core of the first subtask in the plurality of subtasks may be determined before the task is executed. However, a processing core corresponding to another subtask cannot be directly determined before the task is executed, but is determined by the operating system based on performance of the plurality of processing cores in a task execution process. Therefore, an optimal accelerator may be selected from the N accelerators as the target accelerator for the first task based on the processing core corresponding to the first subtask. The N accelerators may be acceleration devices of a same type, or may be acceleration devices of a plurality of different types, and may be selected based on an actual situation. It should be noted that each of the N accelerators has high affinities with some processing cores in the processor 101, in other words, when processing a task run on the processing core with a high affinity, the accelerator can access a corresponding internal memory 102 more quickly, to improve computing efficiency of the system.

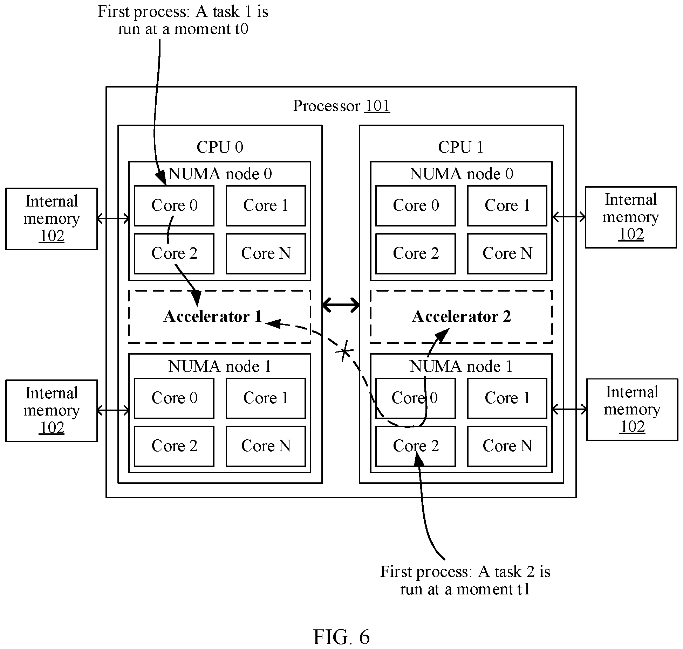

For example, FIG. 6 is a diagram of determining the target accelerator according to this embodiment of the present invention. In the figure, the application service is run in the first process, the task 1 is run at the moment t0, and the task 2 is run at the moment t1. At the moment t0, the user space accelerator library may send an initial application request for the task 1 to the task manager, and the task manager may determine the target accelerator as an accelerator 1 based on the processing core (namely, the processing core 0 in the NUMA node 0 in the CPU 0) corresponding to the first subtask in the task 1. Compared with an accelerator 2, the accelerator 1 has a higher affinity with the processing core 0 in the NUMA node 0 in the CPU 0, in other words, the accelerator 1 can access an internal memory 102 corresponding to the NUMA node 0 more quickly. At the moment t1, the user space accelerator library may send an initial application request for the task 2 to the task manager, and the task manager may determine the target accelerator as the accelerator 2 based on a processing core (namely, a processing core 2 in a NUMA node 1 in a CPU 1) corresponding to a first subtask in the task 2. Compared with the accelerator 1, the accelerator 2 has a higher affinity with the processing core 2 in the NUMA node 1 in the CPU 1, in other words, the accelerator 2 can access an internal memory 102 corresponding to the NUMA node 1 more quickly.

However, in the conventional technology, when the application service is initialized, an accelerator, for example, the accelerator 1, is configured for the first process. Then, each acceleration task that is related to the application service and that is run in the first process is scheduled to the accelerator 1 for processing. For example, at the moment t0, the task 1 is scheduled from the processing core 0 in the NUMA node 0 in the CPU 0 to the accelerator 1 for processing, and at the moment t1, the task 2 is also scheduled from the processing core 2 in the NUMA node 1 in the CPU 1 to the accelerator 1 for processing. However, in this process, the accelerator 1 cannot directly access the internal memory 102 corresponding to the NUMA node 1 in the CPU 1. Therefore, cross-CPU access needs to be performed. This increases access time and reduces processing performance of the accelerator.

In conclusion, in this application, one target accelerator may be allocated to each of the plurality of tasks included in the application service, and the target accelerator may be selected based on a processing core corresponding to a first subtask in each task. Therefore, when different tasks are executed at different time, an optimal accelerator can be selected from the plurality of accelerators as the target accelerator for each of the different tasks. In a process of running the entire application service, complexity of an application interface is effectively reduced. A connection is directly established and used without the need to know topology information and a hardware status of the system. This avoids load imbalance among the plurality of accelerators. Dynamic scheduling improves application performance, avoids performance jitter in a case of non-core binding, and reduces impact of application contention for accelerators on application performance.

In a possible implementation, that the host determines the target accelerator from the N accelerators based on the processing core corresponding to the first subtask in the first task includes: The host determines the target accelerator from the N accelerators based on the processing core corresponding to the first subtask and real-time status information of the N accelerators.

Specifically, the accelerator scheduling engine (which may be specifically the task manager in the accelerator scheduling engine) in the software architecture running on the host may select the target accelerator for the first task. When determining the target accelerator, based on the processing core corresponding to the first subtask in the first task and real-time status information (including current status information of each accelerator) of the plurality of accelerators, an accelerator that has a high affinity with the processing core and currently optimal performance may be determined from the N accelerators as the target accelerator, to ensure that the target accelerator can quickly process the first task and can access the internal memory 102 corresponding to the processing core more quickly. This improves the computing performance of the system. It should be noted that the real-time status information may include but is not limited to load status information, memory access speed information, accelerator capability value information, and the like of each of the N accelerators.

In a possible implementation, the method further includes: The host obtains the real-time status information, where the real-time status information includes one or more of the load status information, the memory access speed information, and the accelerator capability value information of each of the N accelerators; and the memory access speed information indicates corresponding speeds at which a corresponding accelerator accesses different internal memories, and the accelerator capability value information indicates a quantity of acceleration units included in the corresponding accelerator.

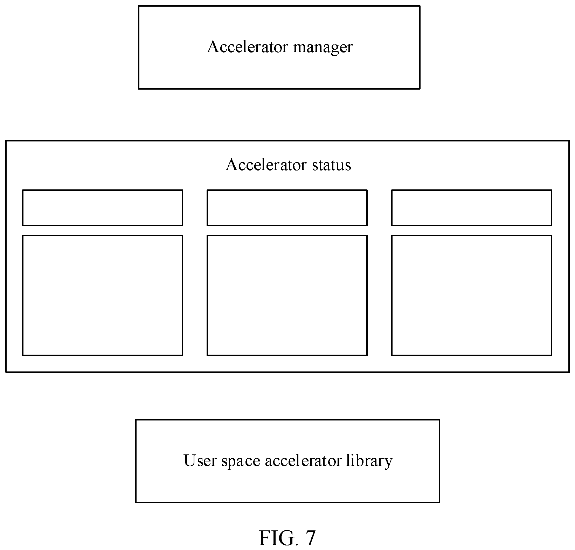

Specifically, the accelerator scheduling engine (which may be specifically the accelerator manager in the accelerator scheduling engine) in the software architecture running on the host may be responsible for maintaining a real-time status of an accelerator device. The status may include but is not limited to an online/available status, load status information, memory access speed information, accelerator capability value information, and the like of the accelerator device. FIG. 7 is a diagram of the accelerator manager according to this embodiment of the present invention. In the figure, the accelerator manager may view an online/available status of each accelerator device in the plurality of accelerators, dynamically maintain an online or offline status of the accelerator device, and support dynamic online/offline. When a device goes online, the accelerator manager may obtain location information (that is, an accelerator topology status) of the accelerator device and set a NUMA affinity, to determine memory access speed information of the accelerator, where the information indicates corresponding speeds at which the corresponding accelerator accesses different internal memories. The accelerator manager may obtain a quantity of acceleration units included in each accelerator, to determine accelerator capability value information, in other words, a larger quantity of acceleration units indicates higher accelerator computing efficiency. The accelerator manager may further dynamically obtain an accelerator load status, and update an accelerator load value in real time.

In a possible implementation, that the host determines the target accelerator from the N accelerators based on the processing core corresponding to the first subtask and the real-time status information of the N accelerators includes: The host determines, from the N accelerators based on the processing core corresponding to the first subtask and the real-time status information of the N accelerators according to a preset scoring rule, an accelerator with a highest score as the target accelerator.

Specifically, the accelerator scheduling engine (which may be specifically the task manager in the accelerator scheduling engine) in the software architecture running on the host may be responsible for selecting the target accelerator from the plurality of accelerators. The task manager may first obtain the real-time status information of the plurality of accelerators, then view information about the processing core corresponding to the first subtask in the first task, and determine, based on the information about the processing core, a NUMA node on which the processing core is located, to determine a NUMA affinity. Further, based on a NUMA affinity, an accelerator capability value, and an accelerator load value that correspond to each accelerator according to the preset scoring rule, comprehensive scoring is performed on each accelerator, and an accelerator with a highest comprehensive score is determined as an optimal accelerator.

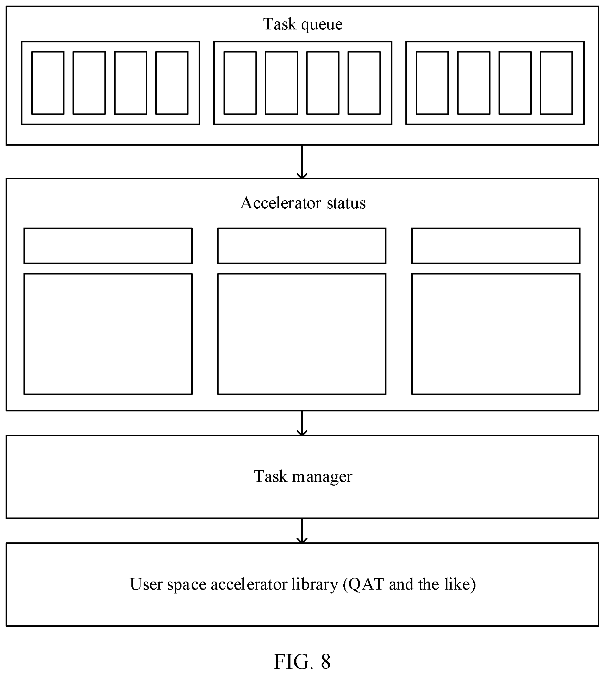

For example, FIG. 8 is a diagram of determining the target accelerator by the task manager according to this embodiment of the present invention. The task manager in the figure may determine the target accelerator for a "schedulable" task with reference to a real-time accelerator status provided by the accelerator manager. Further, the "schedulable" task may be scheduled, based on the user space accelerator library, to the target accelerator for processing, to reduce usage of the processor 101 and improve the system performance.

Step S203: The host schedules the first task to the target accelerator for processing.

Specifically, after the target accelerator is selected from the plurality of accelerators, the first task may be scheduled to the target accelerator for processing, to reduce usage of the processor 101 and improve the computing performance of the system.

In a possible implementation, that the host schedules the first task to the target accelerator for processing includes: The host determines whether a load value corresponding to load status information of the target accelerator is greater than a preset value; and if the load value is less than or equal to the preset value, the host obtains path information of the target accelerator, and schedules, based on the path information of the target accelerator, the first task to the target accelerator for processing.

Specifically, the accelerator scheduling engine (which may be specifically the task manager in the accelerator scheduling engine) in the software architecture running on the host may be responsible for scheduling the task to the target accelerator for processing. However, before the task is scheduled to the target accelerator, whether a current load value of the target accelerator is greater than the preset value may be first determined. If the current load value of the target accelerator is less than or equal to the preset value, it indicates that the target accelerator is in an idle state or a light-loaded state, and the target accelerator can process the first task in a timely manner. Therefore, the task manager may obtain the path information of the target accelerator, and schedule, based on the path information, the task to the target accelerator for processing, to reduce usage of the processor 101 and improve the computing performance of the system.

Optionally, the accelerator manager may generate an accelerator connection pool for each accelerator, and may determine the path information of the target accelerator based on the accelerator connection pool. The accelerator manager may dynamically maintain the accelerator connection pool for a task scheduler to use. When an accelerator device goes online, a connection pool may be established. When the accelerator device is in use, the connection pool may be scaled based on a task status. When the accelerator device goes offline, the connection pool may be destroyed to release a resource.

In a possible implementation, the method further includes: If the load value is greater than the preset value, the host schedules the first task to the processor for processing.

Specifically, before the task is scheduled to the target accelerator, whether the current load value of the target accelerator is greater than the preset value may be first determined. If the current load value of the target accelerator is greater than the preset value, it indicates that the target accelerator is in a busy state and the target accelerator cannot process the first task in a timely manner, or a cross-NUMA cost or a cross-CPU cost is excessively high. Therefore, the task manager may still schedule the first task to the processor for processing, to ensure the computing performance of the system.

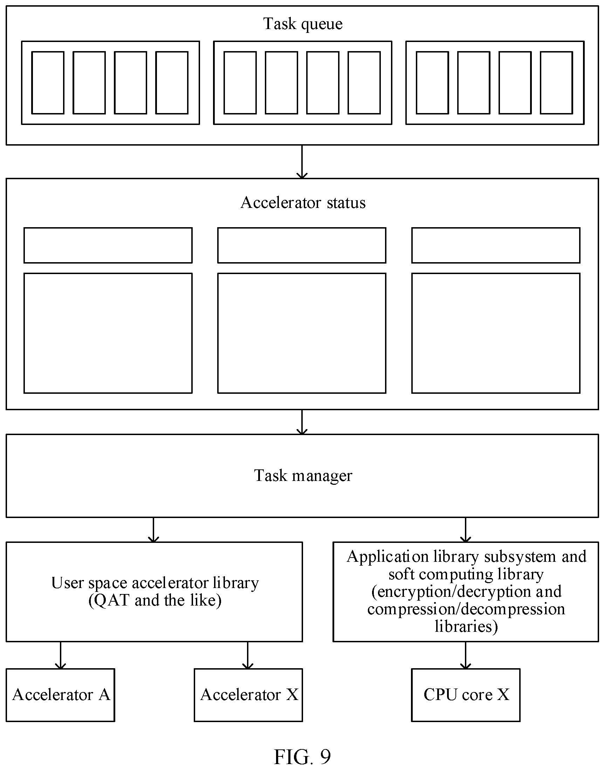

For example, FIG. 9 is a diagram of combining a plurality of devices to schedule a task according to this embodiment of the present invention. In the figure, after obtaining a "configurable" task from a task queue, the task manager may select, for the "configurable" task from the plurality of accelerators based on accelerator status information, an optimal accelerator as the target accelerator, for example, an accelerator A. Further, before the task is scheduled to the accelerator A for processing, whether a current load value of the accelerator A is greater than the preset value may be first determined. If the current load value of the accelerator A is less than or equal to the preset value, it indicates that the accelerator A can process the task in a timely manner. Therefore, the task manager may obtain path information of the accelerator A, and schedule, based on the path information, the task to the accelerator A for processing. If the current load value of the accelerator A is greater than the preset value, it indicates that the accelerator A is in a busy state and the accelerator A cannot process the task in a timely manner, or a cross-NUMA cost or a cross-CPU cost is excessively high. Therefore, the task manager may still schedule the task to the processor for processing, to ensure the computing performance of the system.

In a possible implementation, the method further includes: The host updates the path information of the target accelerator and the processing core corresponding to the first subtask to context information corresponding to the first task.

Specifically, after determining the target accelerator corresponding to the task, the task manager may determine the path information of the target accelerator and information about the processing core, and update the path information of the target accelerator and the information about the processing core to the context information corresponding to the task. Therefore, the subtask in the task may be subsequently scheduled, based on the path information of the target accelerator in the context information, to the target accelerator for processing, and a corresponding internal memory 102 may be accessed based on the information about the processing core in the context information, to improve the computing performance of the system.

Optionally, after the target accelerator is selected for the task, the task may be marked as a "scheduled" task (where it may be understood as that all subtasks in the task may be marked as "scheduled" tasks), so that the subtasks can be subsequently directly scheduled, based on the context information corresponding to the task, to the corresponding accelerator for processing.

Optionally, after receiving the initial application request, the task manager may deliver a session application request, and the task manager allocates a corresponding session resource, to store the context information (for example, the accelerator path information and CPU core information) corresponding to the task.

In a possible implementation, the method further includes: When executing an i^{th} subtask in the plurality of subtasks, the host obtains the path information of the target accelerator from the context information, and schedules the i^{th} subtask to the target accelerator for processing, where i is an integer greater than 1.

Specifically, the task manager may receive a second request, where the second request is an acceleration request delivered by a user space accelerator library for the subtask (namely, the "scheduled" task) in the task during task execution. The task manager responds to the second request, obtains the context information corresponding to the task, and schedules, based on the path information of the target accelerator in the context information, the task to the target accelerator for processing, to improve the computing performance of the system.

Optionally, for a phased initialization request (encryption/decryption initialization or compression/decompression initialization) provided by the user space accelerator library, that is, for the "scheduled" task, if the task manager receives the phased initialization request, the task manager may mark the task as a "schedulable" task, update the information about the processing core, and clear an accelerator path, to reselect an accelerator for the task.

In this application, one target accelerator may be allocated to each of the plurality of tasks included in the application service, and the target accelerator may be selected based on a processing core corresponding to a first subtask in each task. Therefore, when different tasks are executed at different time, an optimal accelerator can be selected from the plurality of accelerators as the target accelerator for each of the different tasks. In a process of running the entire application service, complexity of an application interface is effectively reduced. A connection is directly established and used without the need to know topology information and a hardware status of the system. This avoids load imbalance among the plurality of accelerators. Dynamic scheduling improves application performance, avoids performance jitter in a case of non-core binding, and reduces impact of application contention for accelerators on application performance. Accelerator information is updated in real time, and devices can be dynamically brought online and offline without being perceived by applications.

The foregoing describes in detail the method in embodiments of the present invention, and the following provides a related apparatus in embodiments of the present invention.

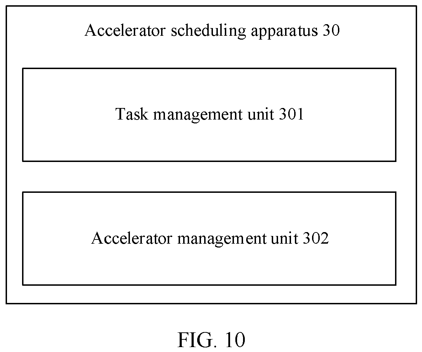

FIG. 10 is a diagram of a structure of an accelerator scheduling apparatus according to an embodiment of the present invention. The accelerator scheduling apparatus 30 may include a task management unit and an accelerator management unit. Detailed descriptions of the modules are as follows.

The task management unit 301 is configured to: receive a first request, where the first request is used to request to configure a target accelerator for a first task, the first task is a task currently being run in a first process, the first process is run in a processor, the processor includes a plurality of processing cores, the first task includes a plurality of subtasks, and each of the subtasks corresponds to one of the plurality of processing cores; determine, in response to the first request, the target accelerator from N accelerators based on a processing core corresponding to a first subtask in the first task, where N is an integer greater than 0; and schedule the first task to the target accelerator for processing.

In a possible implementation, the task management unit 301 is specifically configured to: determine the target accelerator from the N accelerators based on the processing core corresponding to the first subtask and real-time status information of the N accelerators; and schedule, based on path information of the target accelerator, the first task to the target accelerator for processing.

In a possible implementation, the accelerator scheduling apparatus further includes an accelerator management unit 302, and the accelerator management unit is configured to: send the real-time status information to the task management unit, where the real-time status information includes one or more of load status information, memory access speed information, and accelerator capability value information of each of the N accelerators; and the memory access speed information indicates corresponding speeds at which a corresponding accelerator accesses different internal memories, and the accelerator capability value information indicates a quantity of acceleration units included in the corresponding accelerator.

In a possible implementation, the task management unit 301 is specifically configured to: determine, from the N accelerators based on the processing core corresponding to the first subtask and the real-time status information of the N accelerators according to a preset scoring rule, an accelerator with a highest score as the target accelerator.

In a possible implementation, the task management unit 301 is specifically configured to: determine whether a load value corresponding to load status information of the target accelerator is greater than a preset value; and if the load value is less than or equal to the preset value, obtain the path information of the target accelerator, and schedule, based on the path information of the target accelerator, the first task to the target accelerator for processing.

In a possible implementation, the task management unit 301 is further configured to: if the load value is greater than the preset value, schedule the first task to the processor for processing.

In a possible implementation, the task management unit 301 is further configured to: update the path information of the target accelerator and the processing core corresponding to the first subtask to context information corresponding to the first task.

In a possible implementation, the task management unit 301 is further configured to: when executing an i^{th} subtask in the plurality of subtasks, obtain the path information of the target accelerator from the context information, and schedule the i^{th} subtask to the target accelerator for processing, where i is an integer greater than 1.

It should be noted that, for functions of functional units in the accelerator scheduling apparatus 30 described in this embodiment of the present invention, refer to the related descriptions of step S201 to step S203 performed by the accelerator scheduling engine in the method embodiment in FIG. 2. Details are not described herein again.

This application provides a computer storage medium. The computer storage medium stores a computer program, and when the computer program is executed by a processor, any one of the foregoing accelerator scheduling methods is implemented.

An embodiment of this application provides an electronic device. The electronic device includes a processor, and the processor is configured to support the electronic device in implementing corresponding functions in any one of the foregoing accelerator scheduling methods. The electronic device may further include a memory. The memory is configured to be coupled to the processor, and the memory stores program instructions and data that are necessary for the electronic device. The electronic device may further include a communication interface, used by the electronic device to communicate with another device or a communication network.

This application provides a chip system. The chip system includes a processor, configured to support an electronic device in implementing the foregoing functions, for example, generating or processing information in the foregoing accelerator scheduling method. In a possible design, the chip system further includes a memory. The memory is configured to store program instructions and data that are necessary for the electronic device. The chip system may include a chip, or may include a chip and another discrete component.

This application provides a computer program. The computer program includes instructions, and when the computer program is executed on a computer, the computer is enabled to perform the foregoing accelerator scheduling method.

In the foregoing embodiments, the descriptions of each embodiment have respective focuses. For a part that is not described in detail in an embodiment, refer to related descriptions in other embodiments.

It should be noted that, for brief description, the foregoing method embodiments are represented as a series of action combinations. However, persons skilled in the art should understand that this application is not limited to the described action sequence, because some steps may be performed in other sequences or simultaneously according to this application. In addition, persons skilled in the art should also understand that all embodiments described in this specification are preferred embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic form or another form.

The foregoing units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like, and may be specifically a processor in the computer device) to perform all or some of the steps of the methods described in embodiments of this application. The foregoing storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An accelerator scheduling method, wherein the method comprises:
receiving a first request, wherein the first request is used to request to configure a target accelerator for a first task, the first task is a task currently being run in a first process, the first process is run in a processor, the processor comprises a plurality of processing cores, the first task comprises a plurality of subtasks, and each of the subtasks corresponds to one of the plurality of processing cores;
determining, in response to the first request, the target accelerator from N accelerators based on a processing core corresponding to a first subtask in the first task, wherein N is an integer greater than 0; and
scheduling the first task to the target accelerator for processing.

2. The method according to claim 1, wherein the determining the target accelerator from N accelerators based on a processing core corresponding to a first subtask in the first task comprises:
determining the target accelerator from the N accelerators based on the processing core corresponding to the first subtask and real-time status information of the N accelerators.

3. The method according to claim 2, wherein the method further comprises:
obtaining the real-time status information, wherein the real-time status information comprises one or more of load status information, memory access speed information, and accelerator capability value information of each of the N accelerators; and
the memory access speed information indicates corresponding speeds at which a corresponding accelerator accesses different internal memories, and the accelerator capability value information indicates a quantity of acceleration units comprised in the corresponding accelerator.

4. The method according to claim 2 or 3, wherein the determining the target accelerator from the N accelerators based on the processing core corresponding to the first subtask and real-time status information of the N accelerators comprises:
determining, from the N accelerators based on the processing core corresponding to the first subtask and the real-time status information of the N accelerators according to a preset scoring rule, an accelerator with a highest score as the target accelerator.

5. The method according to any one of claims 2 to 4, wherein the scheduling the first task to the target accelerator for processing comprises:
determining whether a load value corresponding to load status information of the target accelerator is greater than a preset value; and
if the load value is less than or equal to the preset value, obtaining path information of the target accelerator, and scheduling, based on the path information of the target accelerator, the first task to the target accelerator for processing.

6. The method according to claim 5, wherein the method further comprises:
if the load value is greater than the preset value, scheduling the first task to the processor for processing.

7. The method according to claim 5 or 6, wherein the method further comprises:
updating the path information of the target accelerator and the processing core corresponding to the first subtask to context information corresponding to the first task.

8. The method according to claim 7, wherein the method further comprises:
when executing an i^{th} subtask in the plurality of subtasks, obtaining the path information of the target accelerator from the context information, and scheduling the i^{th} subtask to the target accelerator for processing, wherein i is an integer greater than 1.

9. An accelerator scheduling apparatus, wherein the accelerator scheduling apparatus comprises a task management unit, and the task management unit is configured to:
receive a first request, wherein the first request is used to request to configure a target accelerator for a first task, the first task is a task currently being run in a first process, the first process is run in a processor, the processor comprises a plurality of processing cores, the first task comprises a plurality of subtasks, and each of the subtasks corresponds to one of the plurality of processing cores;
determine, in response to the first request, the target accelerator from N accelerators based on a processing core corresponding to a first subtask in the first task, wherein N is an integer greater than 0; and
schedule the first task to the target accelerator for processing.

10. The apparatus according to claim 9, wherein the task management unit is specifically configured to:
determine the target accelerator from the N accelerators based on the processing core corresponding to the first subtask and real-time status information of the N accelerators.

11. The apparatus according to claim 10, wherein the accelerator scheduling apparatus further comprises an accelerator management unit, and the accelerator management unit is configured to:
send the real-time status information to the task management unit, wherein the real-time status information comprises one or more of load status information, memory access speed information, and accelerator capability value information of each of the N accelerators; and
the memory access speed information indicates corresponding speeds at which a corresponding accelerator accesses different internal memories, and the accelerator capability value information indicates a quantity of acceleration units comprised in the corresponding accelerator.

12. The apparatus according to claim 10 or 11, wherein the task management unit is specifically configured to:
determine, from the N accelerators based on the processing core corresponding to the first subtask and the real-time status information of the N accelerators according to a preset scoring rule, an accelerator with a highest score as the target accelerator.

13. The apparatus according to any one of claims 10 to 12, wherein the task management unit is specifically configured to:
determine whether a load value corresponding to load status information of the target accelerator is greater than a preset value; and
if the load value is less than or equal to the preset value, obtain path information of the target accelerator, and schedule, based on the path information of the target accelerator, the first task to the target accelerator for processing.

14. The apparatus according to claim 13, wherein the task management unit is further configured to:
if the load value is greater than the preset value, schedule the first task to the processor for processing.

15. The apparatus according to claim 13 or 14, wherein the task management unit is further configured to:
update the path information of the target accelerator and the processing core corresponding to the first subtask to context information corresponding to the first task.

16. The apparatus according to claim 15, wherein the task management unit is further configured to:
when executing an i^{th} subtask in the plurality of subtasks, obtain the path information of the target accelerator from the context information, and schedule the i^{th} subtask to the target accelerator for processing, wherein i is an integer greater than 1.

17. A computer storage medium, wherein the computer storage medium stores a computer program, and when the computer program is executed by a processor, the method according to any one of claims 1 to 8 is implemented.
